Europäisches Patentamt

European Patent Office

Office européen des brevets

(11) Numéro de publication: **0 152 854**
**A1**

## (12) DEMANDE DE BREVET EUROPEEN

(21) Numéro de dépôt: 85101159.3

(22) Date de dépôt: 05.02.85

(51) Int. Cl.⁴: **H 04 L 25/49**

---

(30) Priorité: 06.02.84 FR 8401756

(43) Date de publication de la demande: 28.08.85
Bulletin 85/35

(84) Etats contractants désignés: **BE DE FR GB IT NL**

(71) Demandeur: **LIGNES TELEGRAPHIQUES ET TELEPHONIQUES L.T.T., 1, rue Charles Bourseul, F-78702 Conflans-Ste-Honorine (FR)**

(72) Inventeur: **Abaziou, Jean-Luc, 13, rue de l'Yser, F-22700 Perros-Guirec (FR)**
Inventeur: **Le Penven, Yvon, Allée Saint-Michel, F-22220 Treguier (FR)**
Inventeur: **Niquel, Maurice, Rue de Karent Ar Birgorned, F-22700 Perros-Guirec (FR)**

(74) Mandataire: **Weinmiller, Jürgen et al, Zeppelinstrasse 63, D-8000 München 80 (DE)**

---

(54) Procédé et dispositif de détection d'erreur dans un train d'informations binaires exprimées selon le code CMI.

(57) Procédé et dispositiv de détection d'erreur dans un train d'informations binaires exprimées selon le code CMI.

L'invention concerne un procédé et un dispositif de détection d'erreur dans un train d'informations binaires exprimées selon le code CMI.

Le dispositif comporte un premier sous-ensemble (10) effectuant l'extraction des bits d'information codés respectivement 00 et 11, et un second sous-ensemble (20) effectuant la vérification de l'alternance des bits codés 00 et 11 pour en détecter une éventuelle erreur dans le codage en CMI.

Application aux télécommunications sur fibres optiques.

EP 0 152 854 A1

0152854

## Procédé et dispositif de détection d'erreur dans un train d'informations binaires exprimées selon le code CMI

La présente invention concerne un procédé de détection d'erreur dans un train d'informations binaires exprimées selon le code connu sous les initiales CMI pour "Coded Mark Inversion", ainsi qu'un dispositif assurant la mise en oeuvre de ce procédé.

Le code CMI est un code dérivé d'un code d'impulsions multiniveaux MLB (pour "Multi Level Binary pulse code") à inversion de marque alternée avec seulement deux niveaux de signal : chaque information numérique élémentaire ou bit est transformée en une paire, ou mot, de signaux assimilables à des bits. Ce code CMI est un code d'interface normalisé par le CCITT pour la transmission d'informations numériques à haut débit, et est caractérisé par :
- la représentation d'un bit d'information égal à 0 par 01 ;
- la représentation d'un bit d'information égal à 1 alternativement par 00 ou 11.

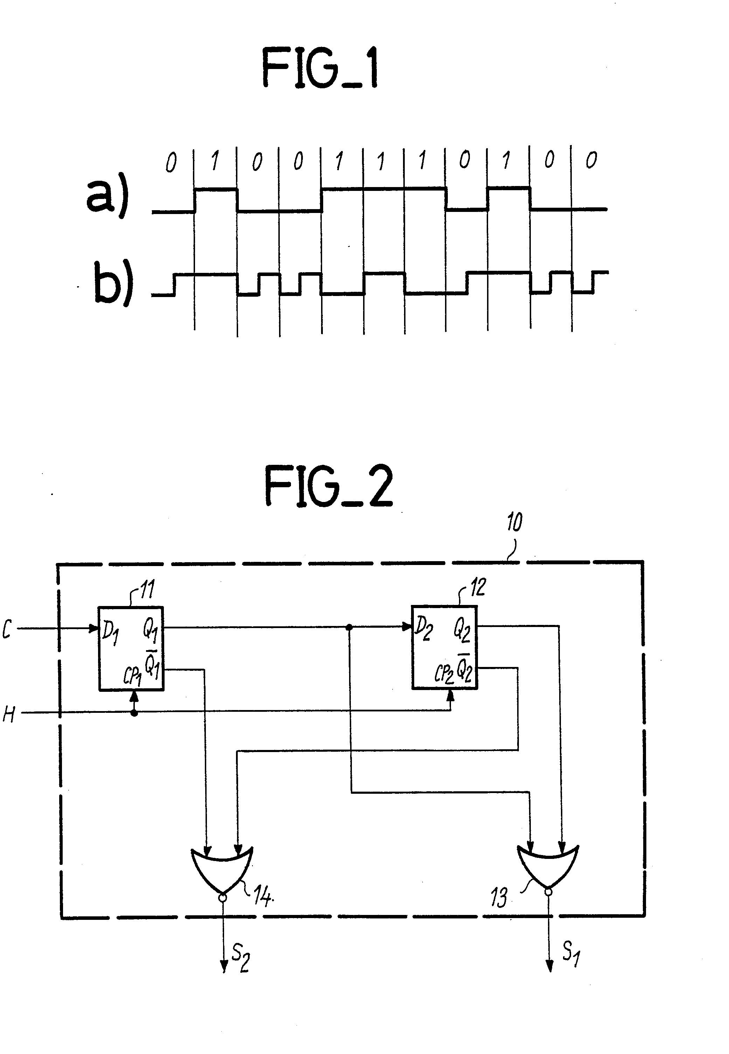

On a représenté sur les figures 1a et 1b, en fonction du temps, d'une part un exemple de train d'informations binaires et d'autre part le train d'informations codées en CMI qui lui correspond ; dans un tel code CMI, la vitesse baud est donc doublée.

Ce code est utilisé principalement dans le domaine des télécommunications par fibres optiques pour des connexions entre équipements proches, mais n'est pas utilisé directement pour des transmissions sur longue distance car il double la vitesse en ligne. Ainsi, à partir du signal codé en CMI transmis par un câble téléphonique puis régénéré à l'aide d'un signal d'horloge ou de rythme de fréquence double de celle du code binaire, il est connu de procéder de la façon suivante côté émission : le signal codé en CMI passe dans un premier transcodeur qui délivre un signal codé en binaire, ce signal passe ensuite dans un embrouilleur pour rompre les suites trop longues de 1 et de 0, et enfin dans un second transcodeur qui fournit un signal codé par exemple en 5B6B et tranmis sur la fibre optique, ce qui permet donc d'obtenir une vitesse en ligne nettement moins élevée que dans le cas d'une transmission directe du code CMI. La récupération du signal codé en CMI, côté réception, se fait d'une façon symétrique à l'aide de deux transcodeurs et d'un désembrouilleur. Toutefois, le fait de mettre en oeuvre deux transcodeurs tant côté émission que côté réception engendre de nombreux inconvénients au point de vue consommation, encombrement et coût.

D'autre part, il s'avère nécessaire de détecter toute erreur susceptible de se produire dans le codage en CMI des informations numériques. Ainsi, dans le système antérieur décrit ci-dessus, la détection d'erreur est effectuée par une mémoire du type PROM (pour "Programmable Read Only Memory") utilisée côté réception pour le transcodage 5B6B/binaire. Par conséquent, la détection d'erreur est réalisée sur un code autre que le code CMI.

Afin de pallier les inconvénients présentés par les transcodeurs du système selon l'art antérieur, une solution consiste à transmettre directement le code CMI sur la fibre optique, donc sans intermédiaire comme précédemment, ce qui est possible avec le développement des fibres optiques monomodes dont la bande passante n'est plus limitée, permettant ainsi de transmettre un code à une vitesse baud élevée.

Dans ces conditions, se pose le problème technique consistant à détecter directement sur le code CMI toute erreur susceptible de se produire lors du codage.

La présente invention a pour but de résoudre ce problème technique en proposant un procédé et un dispositif permettant de détecter d'éventuelles erreurs dans un train d'informations binaires codées en CMI et destinées à être transmises optiquement sur une longue distance et à un débit élevé. Le dispositif de détection d'erreur selon l'invention est d'une structure simple, est particulièrement performant et peut être mis en oeuvre aussi bien du côté émission que du côté réception du système de transmission optique.

A cet effet, l'invention a pour objet un procédé de détection d'erreur dans un train d'informations binaires exprimées selon le code CMI, selon lequel un bit d'information égal à 0 est représenté par 01 et un bit d'information égal à 1 est représenté alternativement par 00 ou 11, procédé qui, à partir d'un signal d'horloge (H) associé au train d'informations binaires codées en CMI, comporte les opérations suivantes :

– une extraction sous forme d'impulsions des bits d'information codés respectivement 00 et 11 ; et

- une vérification de l'alternance des bits extraits codés respectivement 00 et 11, permettant ainsi de détecter une erreur soit en l'absence
d'alternance soit en la présence d'alternance pour une impulsion de
largeur supérieure au double de la période (T) du signal d'horloge,
caractérisé en ce que l'extraction des bits d'information codés respectivement 00 et 11 est réalisée en retardant le train d'informations
binaires codées en CMI d'une période (T) du signal d'horloge.

L'invention vise également un dispositif de détection d'erreur
dans un train (C) d'informations binaires exprimées selon le code CMI,
dans lequel un bit d'information égal à 0 est représenté par 01 et un bit
d'information égal à 1 est représenté alternativement par 00 ou 11, ledit
train d'informations binaires codées en CMI étant associé à un signal
d'horloge, ledit dispositif comportant
- des moyens d'élaboration d'un premier signal sous forme d'un train
d'impulsions représentant les bits d'information codés 00 et d'un second
signal sous forme d'un train d'impulsions représentant les bits d'information codés 11, et
- des moyens de traitement de ces deux trains d'impulsions pour vérifier
l'alternance des impulsions représentant les bits d'information codés
respectivement 00 et 11,
ledit dispositif étant en outre caractérisé en ce que les moyens d'élaboration des premier et second signaux comportent :
- des moyens de régénération du train d'informations binaires codées en
CMI et de son inverse ;
- des moyens de retard égal à une période (T) du signal d'horloge du
train d'informations régénéré et de son inverse ; et
- deux circuits logiques dont l'un reçoit le train d'informations régénéré et ce même train retardé et fournit le train d'impulsions représentant les bits d'information codés 00, et dont l'autre reçoit l'inverse du
train d'informations régénéré et ce même train inverse retardé et
fournit le train d'impulsions représentant les bits d'information
codés 11.

D'autres caractéristiques et avantages de l'invention apparaîtront
mieux dans la description détaillée qui suit, illustrée par les figures suivantes qui, outre les figures 1a et 1b déjà décrites, représentent :

- la figure 2, un mode de réalisation de l'ensemble assurant l'extraction des bits d'information codés 00 et 11 ;

- les figures 3a à 3h, des chronogrammes se rapportant à la figure 2 avec une première forme d'erreur à l'extraction ;

- les figures 4a à 4h, des chronogrammes se rapportant à la figure 2 avec une seconde forme d'erreur à l'extraction ;

- la figure 5, une variante de l'ensemble assurant l'extraction des bits d'information codés 00 et 11 ;

- la figure 6, un mode de réalisation du dispositif global de détection d'erreur selon l'invention ;

- les figures 7a à 7k, des chronogrammes se rapportant à la figure 6 avec la première forme d'erreur ;

- les figures 8a à 8k, des chronogrammes se rapportant à la figure 6 avec la seconde forme d'erreur ;

- la figure 9, une variante du dispositif global de détection d'erreur selon l'invention ;

- les figures 10a à 10m, des chronogrammes se rapportant à la figure 9 avec la première forme d'erreur ; et

- les figures 11a à 11m, des chronogrammes se rapportant à la figure 9 avec la seconde forme d'erreur.

Sur ces différentes figures, les mêmes références se rapportent aux mêmes éléments qui remplissent les mêmes fonctions en vue des mêmes résultats.

Suivant l'invention, la détection d'erreur dans un train d'informations binaires exprimées selon le code CMI et destinées à être transmises à un débit élevé, par exemple à 140 Mbit/s, s'effectue en deux étapes principales qui sont :

- tout d'abord, une extraction sous forme d'impulsions des bits d'information codés respectivement 00 et 11 en utilisant le même signal d'horloge qui a servi à régénérer le code CMI, pour retarder d'une période d'horloge le train d'informations binaires codées en CMI ; la régénération du code CMI est réalisée à une fréquence d'horloge $f_1$ égale au double de la fréquence baud du code binaire, soit $f_1 = 280$ MHz dans l'exemple choisi, qui correspond donc à une période T du signal d'horloge égale à 3,6 ns ;

- puis, une vérification de l'alternance des bits extraits codés respectivement 00 et 11 pour déclarer une erreur dans le cas où cette alternance n'est pas vérifiée ainsi que dans le cas où cette alternance est effectivement vérifiée mais présente une impulsion extraite dont la largeur est supérieure au double de la période T du signal d'horloge.

On va maintenant décrire l'un après l'autre chacun des deux sous-ensembles du dispositif de détection d'erreur selon l'invention mis en oeuvre pour réaliser les deux opérations ci-dessus.

Le premier sous-ensemble pour extraire les bits d'information codés respectivement 00 et 11 est décrit ci-après en référence aux figures 2 à 5.

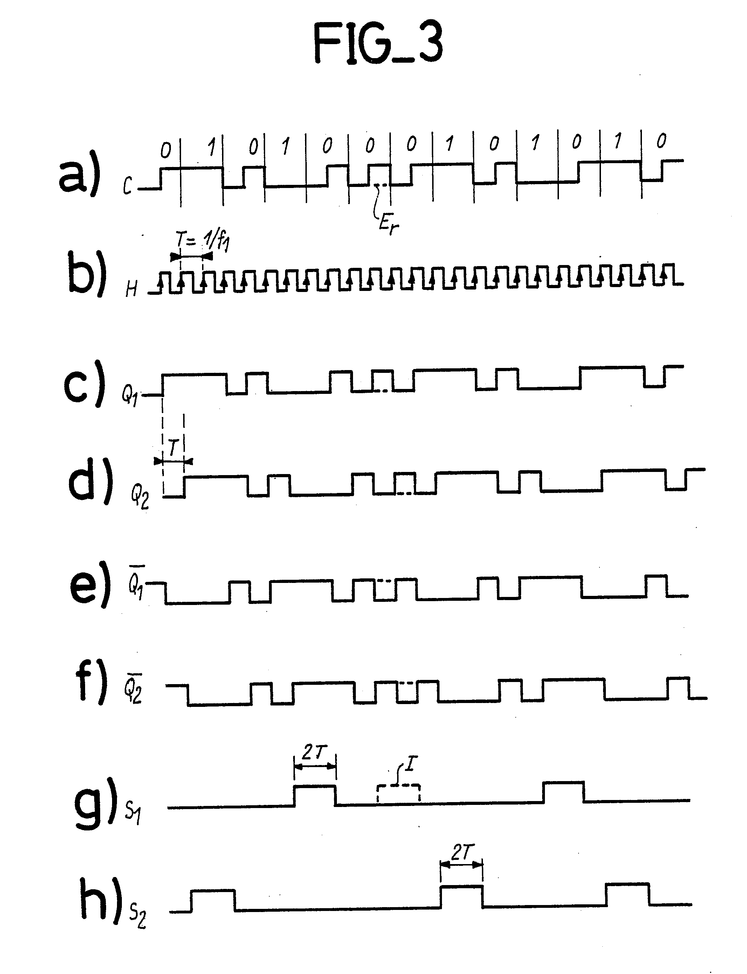

La figure 2 représente un premier mode de réalisation préféré de ce sous-ensemble repéré globalement en 10 et auquel correspond les diagrammes de la figure 3 illustrant en fonction du temps des signaux sous forme de trains d'impulsions existant en différents points du schéma de la figure 2. Le diagramme 3a représente à titre d'exemple une suite d'informations binaires à laquelle correspond le signal C codé en CMI (traits pleins).

Le sous-ensemble 10 de la figure 2 comporte tout d'abord des moyens de régénération du signal C codé CMI, constitués par une bascule de type D (11) ayant une première entrée $D_1$ recevant le signal C et une seconde entrée $CP_1$ recevant le signal d'horloge H (diagramme 3b) qui a servi à engendrer les informations codées selon le code CMI. Cette horloge, de période $T = 1/f_1$, est prise au milieu de chaque information codée en CMI. On rappelle que dans une bascule de type D, le signal de sortie devient égal, à un décalage près dû au temps de propagation de la bascule, au signal d'entrée aux fronts de montée du signal d'horloge. Ainsi, la bascule 11 fournit en sa sortie directe un signal $Q_1$ (diagramme 3c) qui correspond donc au signal C, et comporte une sortie inversée délivrant un signal $\overline{Q_1}$ (diagramme 3e) qui correspond donc à l'inverse du signal C. Dans un souci de simplicité, on n'a pas représenté sur les diagrammes 3c et 3e le temps de propagation introduit par la bascule.

La bascule 11 est suivie d'une seconde bascule de type D (12) destinée à retarder les signaux $Q_1$ et $\overline{Q_1}$ d'une période T du signal d'horloge. A cet effet, la bascule 12 comporte une première entrée $D_2$ recevant le signal $Q_1$ et une seconde entrée $CP_2$ recevant le signal d'horloge H. Ainsi, les deux bascules en série 11 et 12 sont chacune pilotées par la même horloge, de sorte que la bascule 12 fournit en sa sortie directe un signal $Q_2$ (diagramme 3d) qui correspond donc au signal C retardé d'une période T. Le diagramme 3f illustre le signal $\overline{Q_2}$ fourni par la sortie inversée de la bascule 12, ce signal correspondant donc à l'inverse du signal C retardé d'une période T. Sur ces diagrammes 3d et 3f, on n'a pas également représenté le temps de propagation introduit par cette bascule 12.

Le sous-ensemble 10 de la figure 2 comporte également deux circuits logiques constitués respectivement par deux portes logiques NON-OU (13 et 14) dont l'une 13 reçoit les deux signaux $Q_1$ et $Q_2$ et élabore un signal de sortie $S_1$ (diagramme 3g) sous forme d'impulsions représentant les bits d'information codés 00, au nombre de deux (traits pleins) dans l'exemple choisi, et dont l'autre 14 reçoit les deux signaux $\overline{Q_1}$ et $\overline{Q_2}$ et élabore un signal de sortie $S_2$ (diagramme 3h) sous forme d'impulsions représentant les bits d'information codés 11, au nombre de trois dans l'exemple choisi.

Ainsi, en l'absence de toute erreur dans le codage des informations binaires selon le code CMI, les impulsions des deux signaux de sortie $S_1$ et $S_2$ représentant les bits d'information codés respectivement 00 et 11 sont en alternance et ont chacune une largeur égale soit à une période T du signal d'horloge soit au double de cette période ; dans l'exemple choisi et comme représenté sur les diagrammes 3g et 3h, toutes les impulsions (traits pleins) sont de même largeur égale à 2T.

Par contre, lorsqu'une erreur se produit dans le codage en CMI des informations binaires, celle-ci peut prendre deux formes distinctes au niveau des signaux de sortie $S_1$ et $S_2$.

Une première forme d'erreur consiste en la présence d'une impulsion supplémentaire détruisant l'alternance des impulsions des deux signaux de sortie $S_1$ et $S_2$ représentant les bits codés respectivement 00 et 11. Cette forme d'erreur est représentée en pointillés sur la figure 3 et se traduit par une impulsion supplémentaire I (diagramme 3g), de largeur égale par exemple à 2T, sur le signal $S_1$ par exemple ; dans ce cas, l'erreur $E_r$ (diagramme 3a) dans le codage CMI réside en une représentation d'un bit d'information égal à 0 par 00 au lieu de 01.

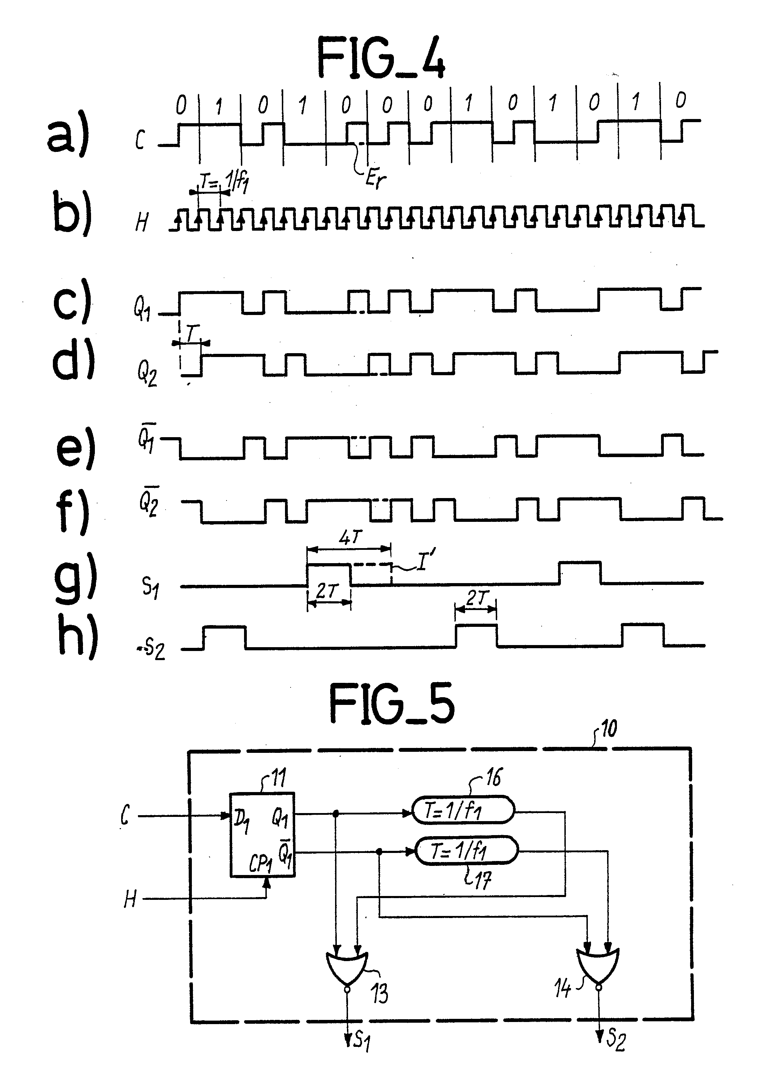

Une seconde forme d'erreur consiste en la présence d'une impulsion sur l'un des deux signaux de sortie $S_1$ et $S_2$, qui présente une largeur supérieure au double de la période du signal d'horloge et qui assure néanmoins l'alternance des impulsions des deux signaux de sortie représentant les bits codés respectivement 00 et 11. Cette forme d'erreur est représentée en pointillés sur la figure 4, dont par ailleurs les diagrammes 4a à 4h en traits pleins reprennent ceux de la figure 3, et se traduit par une impulsion I' (diagramme 4g), de largeur égale par exemple à 4T, sur le signal $S_1$ par exemple ; cette impulsion trop large de 2T est due à la même erreur $E_r$ (diagramme 4a) que précédemment, à savoir une représentation par 00 au lieu de 01 d'un bit d'information égal à 0.

La figure 5 représente une variante du sous-ensemble 10 assurant l'extraction des bits codés respectivement 00 et 11. Cette variante consiste à retarder les deux signaux de sortie $Q_1$ et $\overline{Q_1}$ de la bascule 11 d'une période T du signal d'horloge au moyen de deux lignes à retard identiques (16 et 17) constituées par exemple par deux coaxiaux reliés respectivement aux deux sorties de la bascule 11, permettant ainsi de fournir aux deux portes logiques NON-OU (13 et 14) d'une part le signal régénéré C retardé d'une période T et d'autre part l'inverse de ce signal régénéré C et retardé de cette même période, comme précédemment.

Une fois réalisée l'extraction des bits d'information codés respectivement 00 et 11, la seconde opération du procédé selon l'invention consiste à vérifier l'alternance de ces bits pour détecter toute erreur éventuelle dans le codage en CMI.

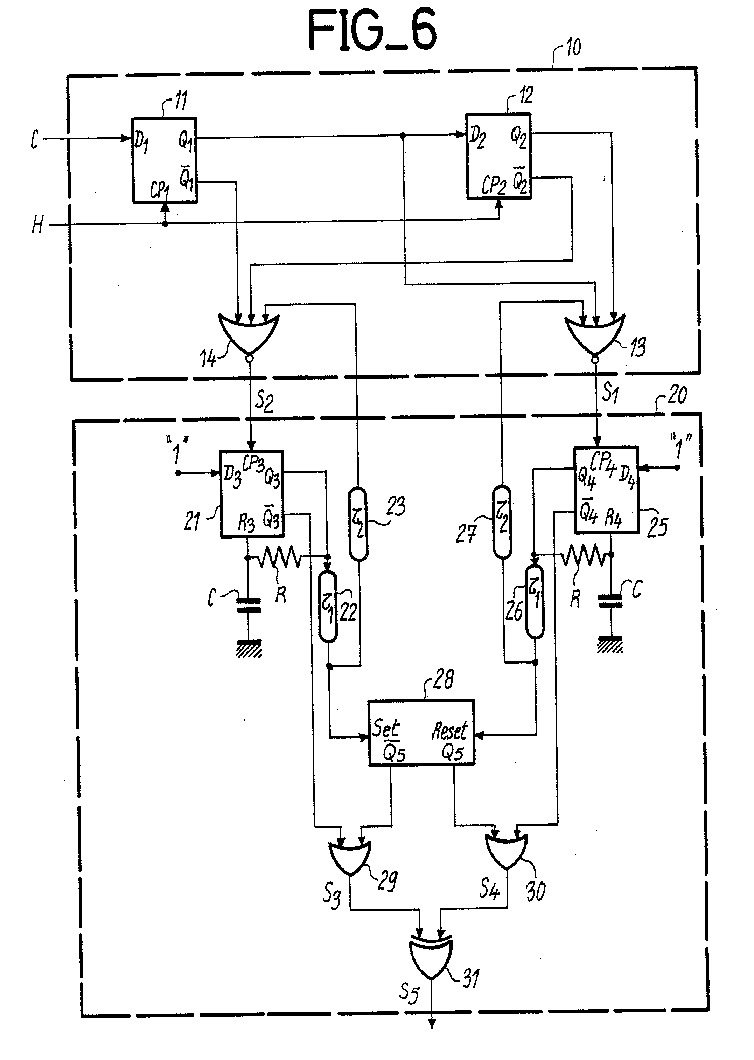

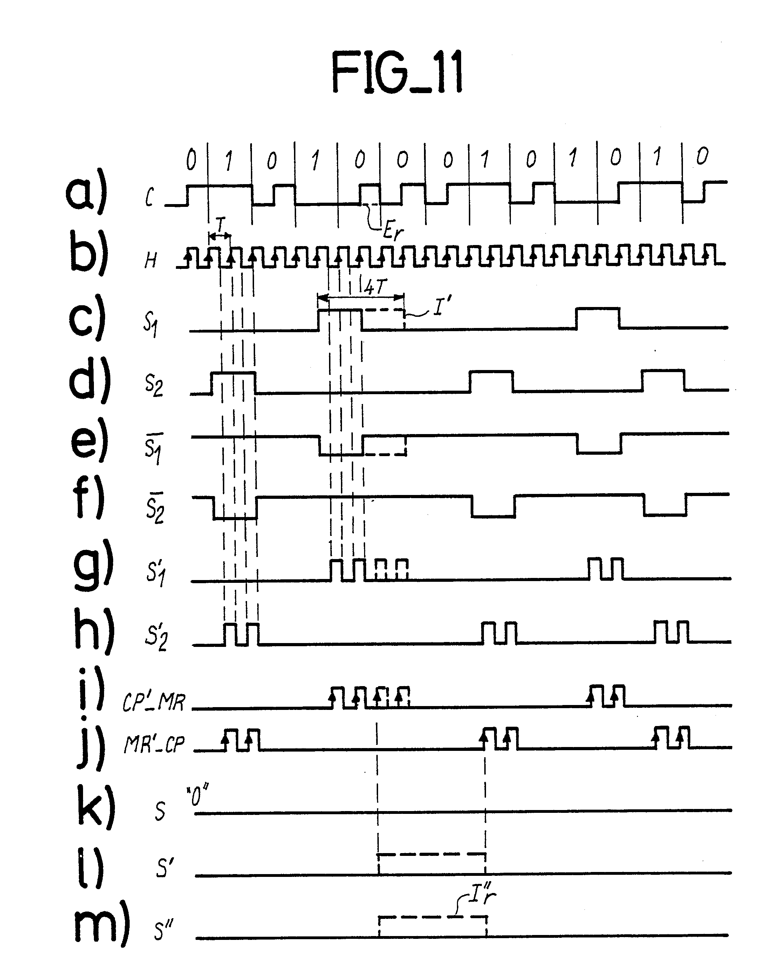

Cette vérification de l'alternance des bits codés 00 et 11 est effectuée au moyen du second sous-ensemble du dispositif de détection d'erreur selon l'invention par traitement des deux trains d'impulsions $S_1$ et $S_2$, et que l'on va décrire ci-après en référence aux figures 6 à 11.

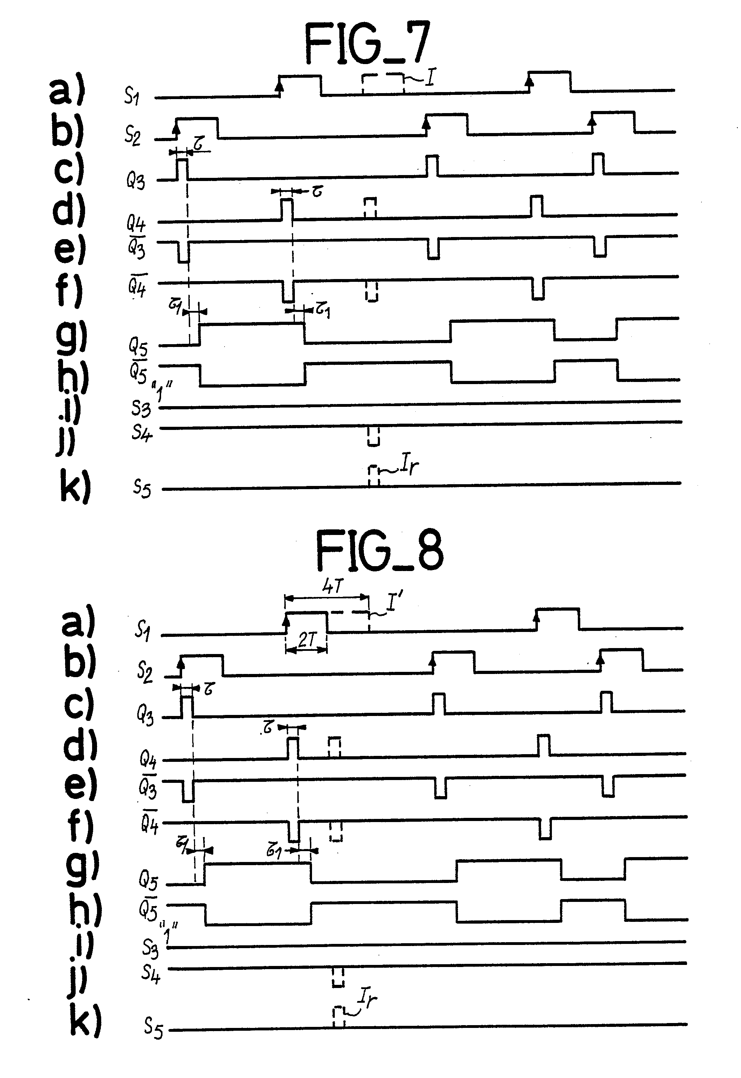

Sur la figure 6, on a représenté le premier sous-ensemble 10 décrit précédemment (figure 2) en relation avec le second sous-ensemble repéré globalement en 20 selon un premier mode de réalisation. Les diagrammes de la figure 7 illustrent en fonction du temps des signaux sous forme d'impulsions existant en différents points du sous-ensemble 20 de la figure 6. Les deux premiers diagrammes 7a et 7b reprennent l'exemple des deux signaux de sortie $S_1$ et $S_2$ (traits pleins) après extraction des bits codés 00 et 11 tels qu'illustrés sur les diagrammes 3g et 3h.

Le sous-ensemble 20 de la figure 6 comporte une première bascule de type D (21) ayant une première entrée $D_3$ constamment au niveau haut égal à 1, une seconde entrée d'horloge $CP_3$ recevant le signal $S_2$ représentant les bits d'information codés 11, et deux sorties inverses l'une de l'autre. Sur la sortie directe de la bascule 21 sont connectés d'une part une première ligne à retard 22, constituée par exemple par un coaxial, introduisant un retard donné $\S_1$ égal par exemple à 1,5 ns, et d'autre part un réseau RC relié en commun à une troisième entrée de la bascule dite de remise à zéro $R_3$. Les valeurs de la résistance R et du condensateur C sont choisies de façon à réaliser de fines impulsions pour le signal $Q_3$ (diagramme 7c) en sortie directe de la bascule 21, la largeur des impulsions étant égale à la constante de temps $\S = RC$. Sur le diagramme 7c, on n'a pas représenté le temps de propagation introduit par la bascule, dans un souci de simplicité.

Comme il apparaît sur la figure 6, une seconde ligne à retard 23, constituée par exemple par un coaxial, est connectée en contre-réaction entre la sortie de la ligne à retard 22 et une entrée de la porte logique NON-OU (14). Cette ligne à retard 23 introduit un retard $\S_2$ qui est imposé de façon à avoir : $\S + \S_1 + \S_2 = 2T$.

Parallèlement, le sous-ensemble 20 de la figure 6 comporte une seconde bascule de type D (25) ayant les mêmes caractéristiques que la première bascule 21 décrite précédemment, à savoir une entrée $D_4$ au niveau haut, une entrée d'horloge $CP_4$ qui elle reçoit le signal $S_1$ représentant les bits d'information codés 00, et deux sorties inverses l'une de l'autre.

La bascule 25 est associée aux mêmes types de circuits que ceux de la bascule 21, à savoir :
- un réseau RC identique à son homologue et connecté en commun à une entrée dite de remise à zéro $R_4$ de cette bascule 25 ;
- une première ligne à retard 26 identique à son homologue et introduisant le même retard $\S_1$ ;

0152854

- une seconde ligne à retard 27 identique à son homologue, introduisant le même retard $\S_2$, et connecté en contre-réaction sur la porte logique NON-OU (13).

Sur la figure 6, le sous-ensemble 20 comporte de plus une bascule de type RS (28) dont l'entrée set (mise à un) est reliée à la ligne à retard 22 et dont l'entrée reset (remise à zéro) est reliée à la ligne à retard 26, et un circuit logique comprenant :

- deux portes logiques OU (29 et 30) dont l'une 29 comporte deux entrées reliées respectivement aux deux sorties inversées respectives des bascules 21 et 28, et dont l'autre 30 comporte deux entrées reliées respectivement à la sortie inversée de la bascule 25 et à la sortie directe de la bascule 28 ;

- une porte logique OU exclusif 31 connectée en sortie des deux portes logiques précédentes 29 et 30.

Le fonctionnement du sous-ensemble 20 de la figure 6 est le suivant en s'appuyant sur les diagrammes de la figure 7 et en supposant tout d'abord qu'aucune erreur ne s'est produite dans le codage en CMI ; dans ce cas, les signaux de sortie $S_1$ et $S_2$ sont du type représenté en traits pleins sur les diagrammes 7a et 7b.

Sur chaque front de montée des signaux $S_1$ et $S_2$ servant de signaux d'horloge pour les deux bascules 21 et 25, ces dernières fournissent en leur sortie directe respective une fine impulsion de largeur $\S = RC$. On a représenté en $Q_3$ et $\overline{Q_3}$ sur les diagrammes 7c et 7e les signaux de sortie de la bascule 21, et en $Q_4$ et $\overline{Q_4}$ sur les diagrammes 7d et 7f ceux de la bascule 25. A chaque impulsion retardée de $\S_1$ du signal $Q_3$, et qui est reçue par l'entrée set de la bascule 28, cette dernière passe à l'état 1 pour revenir à l'état 0 à l'impulsion suivante retardée de $\S_1$ du signal $Q_4$ qui est reçue par l'entrée reset de la bascule 28. Les diagrammes 7g et 7h illustrent les deux signaux de sortie directe $Q_5$ et inversée $\overline{Q_5}$ de la bascule 28.

Dès lors, les deux signaux de sortie $S_3$ (diagramme 7i) et $S_4$ (diagramme 7j) des deux portes logiques OU (29 et 30) sont à l'état 1, de sorte que le signal de sortie $S_5$ (diagramme 7k) de la porte logique OU exclusif est à l'état 0, signifiant bien qu'aucune erreur n'a été commise dans le codage en CMI des informations binaires.

Lors d'une erreur dans ce codage en CMI se traduisant par une impulsion supplémentaire détruisant l'alternance des bits codés respectivement 00 et 11, comme par exemple l'impulsion I sur le signal $S_1$ telle que représentée en pointillés sur le diagramme 7a qui reprend le diagramme 3g, le signal de sortie $Q_4$ (diagramme 7d) de la bascule 25 comporte deux impulsions consécutives présentes entre deux impulsions du signal de sortie $Q_3$ de la bascule 21 ; dès lors, et comme représenté en pointillés sur les divers diagrammes de la figure 7, la porte logique OU exclusif 31 fournit une impulsion dite d'erreur $I_r$ (diagramme 7k), permettant ainsi de détecter l'erreur $E_r$ (diagramme 3a) dans le codage en CMI des informations binaires.

Les diagrammes 8a à 8k en traits pleins reprennent ceux de la figure 7, et on a représenté en pointillés sur le diagramme 8a l'autre forme d'erreur se traduisant par une impulsion I' dans le signal $S_1$ dont la largeur est supérieure au double de la période T du signal d'horloge, soit 4T dans l'exemple choisi, mais avec conservation de l'alternance des bits codés 00 et 11. Cette forme d'erreur reprend celle illustrée sur le diagramme 4g.

Dans ce cas, le signal de sortie $Q_4$ (diagramme 8d) de la bascule 25 fournit une seconde impulsion fine à l'instant $t = 2T$ de l'impulsion I' du signal $S_1$, en raison de la contre-réaction réalisée par la ligne à retard 27 (retard $\S_2$) sur la porte logique NON-OU (13) ; dès lors, comme précédemment, une impulsion dite d'erreur $I_r$ (diagramme 8k) est fournie en sortie de la porte logique OU exclusif 31, permettant ainsi de détecter l'erreur $E_r$ (diagramme 4a) dans le codage en CMI des informations binaires.

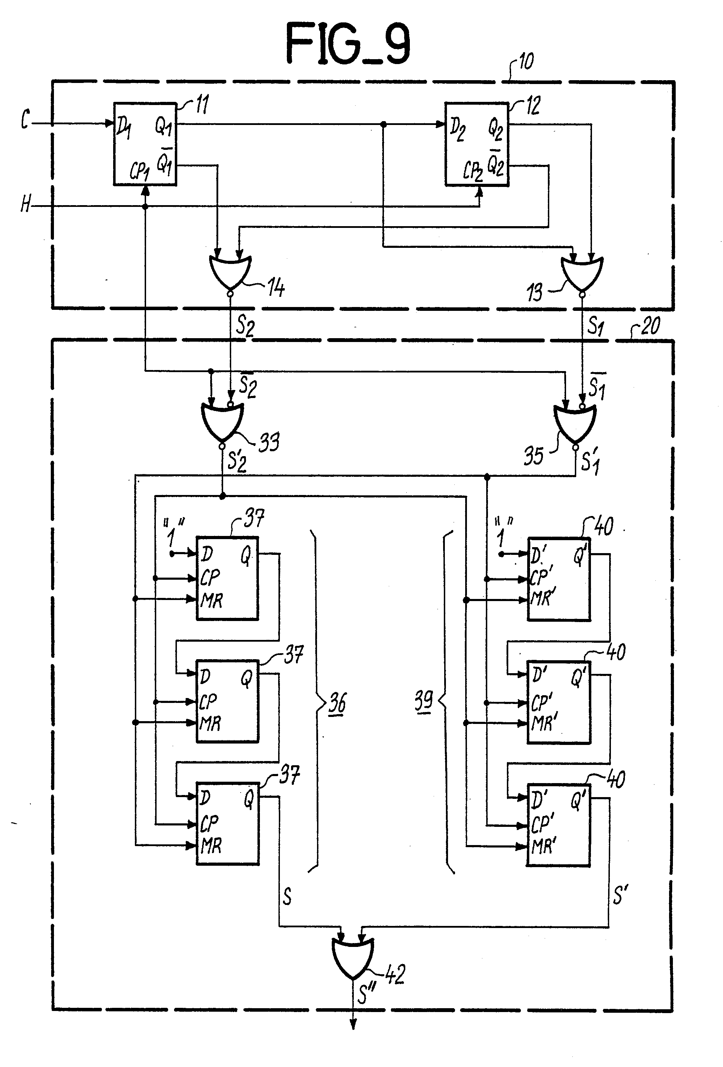

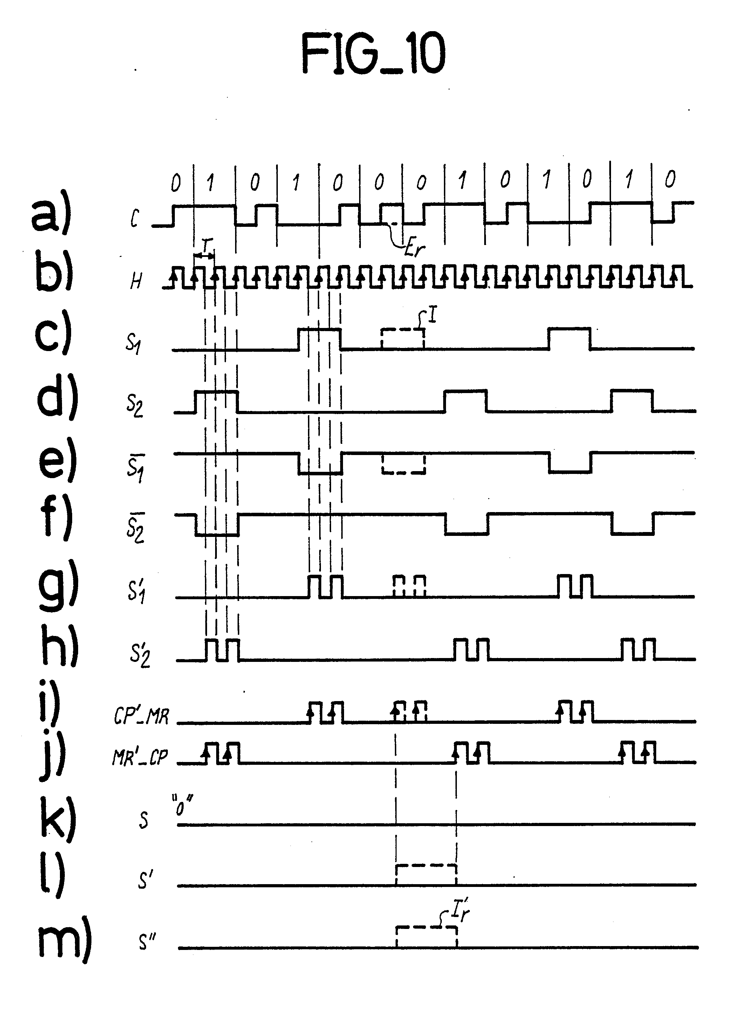

La figure 9 représente une variante préférée du sous-ensemble 20 assurant la détection d'erreur éventuelle lors de la vérification de l'alternance des bits codés respectivement 00 et 11. Cette variante est illustrée sur la figure 9 en relation avec le sous-ensemble 10 décrit plus haut (figure 2) ; dans ce cas, le dispositif général de détection d'erreur de la figure 9 présente l'avantage de pouvoir être réalisé sous une forme entièrement intégrée. Les diagrammes de la figure 10 représentent en fonction du temps des signaux sous forme d'impulsions existant en différents points du sous-ensemble 20 de la figure 9, à l'exception du

0152854

diagramme 10a qui reprend l'exemple de signal C codé CMI.

Ce sous-ensemble 20 de la figure 9 comporte une première porte logique NON-OU (33) avec une entrée inversée recevant le signal $S_2$ (diagramme 10d) représentant les bits d'information codés 11 et avec une entrée directe recevant le signal d'horloge H (diagramme 10b), de période T, associé au signal C codé CMI. On a représenté en $\overline{S_2}$ sur le diagramme 10f le signal en sortie de l'inverseur illustré symboliquement sur l'une des entrées de cette porte NON-OU, et en $S'_2$ sur le diagramme 10h son signal de sortie qui comporte deux impulsions consécutives pour chaque bit codé 11.

De même, une seconde porte logique NON-OU (35) présente une entrée inversée qui reçoit le signal $S_1$ (diagramme 10c, traits pleins) représentant les bits d'information codés 00 et une entrée directe qui reçoit le même signal d'horloge H que précédemment. On a représenté en $\overline{S_1}$ sur le diagramme 10e le signal en sortie de l'inverseur illustré symboliquement sur l'une des entrées de cette porte logique NON-OU, et en $S'_1$ sur le diagramme 10g son signal de sortie qui comporte également deux impulsions consécutives pour chaque bit codé 00.

Comme il apparaît sur la figure 9, le sous-ensemble 20 comporte de plus un premier registre à décalage 36 à trois bascules identiques du type D (37) reliées en série et ayant chacune une entrée d'horloge commune CP à laquelle est appliqué le signal $S'_2$ et une entrée dite de remise à zéro MR à laquelle est appliqué le signal $S'_1$, l'entrée D de la première bascule étant au niveau haut égal à 1.

Parallèlement, un second registre à décalage 39 est également constitué de trois bascules identiques du type D (40) reliées en série et ayant chacune une entrée d'horloge commune CP' recevant le signal $S'_1$ et une entrée de remise à zéro MR' recevant le signal $S'_2$, l'entrée D' de la première bascule étant également au niveau haut.

Le diagramme 10i (traits pleins) représente le signal $S'_1$ servant à la fois de signal d'horloge CP' et de signal de remise à zéro MR, tandis que le diagramme 10j représente le signal $S'_2$ servant quant à lui à la fois de signal d'horloge CP et de signal de remise à zéro MR'.

Sur la figure 9, les sorties respectives Q et Q' des deux registres à décalage 36 et 39 sont reliées à une porte logique OU (42) fournissant un signal d'erreur, comme on va le voir dans ce qui suit.

Tout d'abord, en l'absence de toute erreur dans le codage en CMI des informations binaires, et au premier coup d'horloge CP (diagramme 10j), seule la sortie Q de la première bascule du registre à décalage 36 est à l'état 1, tandis que toute les sorties Q' des bascules du registre à décalage 39 sont à l'état 0 en raison de la première impulsion MR' (diagramme 10j) reçue par chacune des bascules du registre 39. Au coup d'horloge suivant CP, seules les sorties Q des deux premières bascules du registre 36 sont à l'état 1, les sorties Q' des bascules du registre 39 restant à l'état 0. Au troisième coup d'horloge, CP' cette fois (diagramme 10i), toutes les sorties Q des bascules du registre 36 passent à l'état 0, tandis que seule la sortie Q' de la première bascule du registre 39 passe à l'état 1 ; et ainsi de suite pour les coups d'horloge suivants CP et CP' tels que représentés en traits pleins sur les diagrammes 10i et 10j. On a représenté en S et S' sur les diagrammes 10k et 10l les signaux de sortie des deux registres à décalage 36 et 39, qui sont donc tous deux au niveau 0, et en S" sur le diagramme 10m le signal de sortie de la porte logique OU (42) qui est au niveau 0, signifiant bien qu'aucune erreur n'a été commise dans le codage en CMI.

On a illustré en pointillés sur la figure 10 la première forme d'erreur se traduisant comme précédemment par une impulsion supplémentaire I (diagramme 10c) détruisant l'alternance des bits codés 00 et 11. Dans ce cas, au cinquième coup d'horloge (CP' sur le diagramme 10i), toutes les sorties Q' des trois bascules du registre 39 sont à l'état 1, tandis que celles Q des bascules du registre 36 sont à l'état 0, de sorte que le signal de sortie S" passe du niveau 0 au niveau 1. Ce même signal de sortie reste au niveau 1 lors du sixième coup d'horloge, puis revient au niveau 0 au coup d'horloge suivant (CP sur le diagramme 10j). Ainsi, la porte logique OU (42) fournit une impulsion dite d'erreur $I'_r$ (diagramme 10m) significative de l'erreur $E_r$ (diagramme 10a) dans le codage en CMI des informations binaires.

On notera que la condition à respecter pour déclarer une erreur réside dans le fait qu'il est nécessaire d'avoir au moins trois impulsions consécutives sur le même signal d'horloge CP ou CP', et donc de mettre en oeuvre au moins trois bascules pour chacun des deux registres à décalage.

Les diagrammes 11a à 11m en traits pleins reprennent ceux de la figure 10, et on a illustré en pointillés sur le diagramme 11c la seconde forme d'erreur se traduisant, comme précédemment, par une impulsion trop large I' dans le signal $S_1$ et avec conservation de l'alternance des bits codés 00 et 11. Comme dans le cas de l'erreur illustrée sur la figure 10, le signal de sortie S" (diagramme 11m) passe du niveau 0 au niveau 1 au cinquième coup d'horloge (CP' sur le diagramme 11i), reste à ce niveau 1 au sixième coup d'horloge, puis revient au niveau 0 au coup d'horloge suivant (CP sur le diagramme 11j). Comme précédemment, la porte logique OU (42) fournit donc une impulsion dite d'erreur $I"_r$ (diagramme 11m) significative de l'erreur $E_r$ (diagramme 11a) dans le codage en CMI.

On notera que la description ci-dessus a été faite en référence à une seule erreur commise dans le codage en CMI des informations binaires ; bien sûr, l'invention s'applique également pour déceler plusieurs erreurs réalisées dans le codage.

De plus, l'invention peut aussi s'appliquer dans le cas d'un code selon lequel un bit d'information égal à 0 est représenté par 10, avec toujours un bit d'information égal à 1 représenté alternativement par 00 ou 11.

Bien entendu, l'invention n'est nullement limitée aux modes de réalisation décrits et représentés et comprend tous les équivalents techniques des moyens décrits ainsi que leurs combinaisons si celles-ci sont effectuées selon l'esprit de l'invention et mises en oeuvre dans le cadre des revendications qui suivent.

0152854

REVENDICATIONS

1/ Procédé de détection d'erreur dans un train (C) d'informations binaires exprimées selon le code CMI selon lequel un bit d'information égal à 0 est représenté par 01 et un bit d'information égal à 1 est représenté alternativement par 00 ou 11, procédé qui, à partir d'un signal d'horloge (H) associé au train d'informations binaires codées en CMI, comporte les opérations suivantes :

- une extraction sous forme d'impulsions des bits d'information codés respectivement 00 et 11 ; et

- une vérification de l'alternance des bits extraits codés respectivement 00 et 11, permettant ainsi de détecter une erreur soit en l'absence d'alternance soit en la présence d'alternance pour une impulsion de largeur supérieure au double de la période (T) du signal d'horloge, caractérisé en ce que l'extraction des bits d'information codés respectivement 00 et 11 est réalisée en retardant le train d'informations binaires codées en CMI d'une période (T) du signal d'horloge.

2/ Dispositif de détection d'erreur dans un train (C) d'informations binaires exprimées selon le code CMI, dans lequel un bit d'information égal à 0 est représenté par 01 et un bit d'information égal à 1 est représenté alternativement par 00 ou 11, ledit train d'informations binaires codées en CMI étant associé à un signal d'horloge, ledit dispositif comportant

- des moyens (10) d'élaboration d'un premier signal ($S_1$) sous forme d'un train d'impulsions représentant les bits d'information codés 00 et d'un second signal ($S_2$) sous forme d'un train d'impulsions représentant les bits d'information codés 11, et

- des moyens (20) de traitement de ces deux trains d'impulsions pour vérifier l'alternance des impulsions représentant les bits d'information codés respectivement 00 et 11,

caractérisé en ce que les moyens d'élaboration des premier ($S_1$) et second ($S_2$) signaux comportent :

- des moyens (11) de régénération du train d'informations binaires codées en CMI et de son inverse ;

- des moyens (12 ; 16, 17) de retard égal à une période (T) du signal d'horloge du train d'informations régénéré et de son inverse ; et

0152854

- deux circuits logiques (13, 14) dont l'un reçoit le train d'informations régénéré et ce même train retardé et fournit le train d'impulsions représentant les bits d'information codés 00, et dont l'autre reçoit l'inverse du train d'informations régénéré et ce même train inverse retardé et fournit le train d'impulsions représentant les bits d'information codés 11.

3/ Dispositif selon la revendication 2, caractérisé en ce que les moyens de régénération sont constitués par une première bascule de type D (11) ayant une première entrée à laquelle est appliqué le train (C) d'informations binaires codées en CMI, une seconde entrée dite d'horloge à laquelle est appliqué le signal d'horloge (H), et deux sorties dont l'une fournit ce même train régénéré et dont l'autre fournit l'inverse de ce train régénéré.

4/ Dispositif selon la revendication 3, caractérisé en ce que les moyens de retard sont constitués par une seconde bascule de type D (12) ayant une première entrée à laquelle est appliqué le train (C) d'informations régénéré fourni par la première bascule, une seconde entrée dite d'horloge à laquelle est appliqué le signal d'horloge (H), et deux sorties dont l'une fournit le train régénéré et retardé et dont l'autre fournit l'inverse de ce train régénéré et retardé, et en ce que chacun des deux circuits logiques est constitué par une porte logique NON-OU (13 ; 14).

5/ Dispositif selon la revendication 3, caractérisé en ce que les moyens de retard sont constitués par deux lignes à retard (16, 17) introduisant chacune un retard égal à une période (T) du signal d'horloge et reliées respectivement aux deux sorties de la première bascule (11), et en ce que chacun des deux circuits logiques est constitué par une porte logique NON-OU (13 ; 14).

6/ Dispositif selon l'une des revendications 2 à 5, caractérisé en ce que les moyens (20) de traitement des deux trains d'impulsions représentant respectivement les bits d'information codés 00 et ceux codés 11 comportent :

- une troisième bascule de type D (21) ayant une première entrée à laquelle est appliqué un niveau haut égal à 1, une seconde entrée dite d'horloge à laquelle est appliqué le train d'impulsions représentant les bits d'information codés 11, une première sortie fournissant un signal

0152854

sous forme d'impulsions de largeur donnée définie par la constante de temps introduite par une résistance (R) et un condensateur (C) connectés en commun à une troisième entrée de la bascule dite de remise à zéro, et une seconde sortie fournissant l'inverse de ce signal sous forme d'impulsions ;

- un premier circuit à retard (22) relié à la première sortie de la troisième bascule et un second circuit à retard (23) connecté en contre-réaction entre la sortie de ce circuit à retard et une entrée du circuit logique fournissant le train d'impulsions représentant les bits d'information codés 11 ;

- une quatrième bascule de type D (25) réalisée de façon identique à la troisième bascule et pilotée par le train d'impulsions représentant les bits d'information codés 00 ;

- un troisième circuit à retard (26) relié à la première sortie de la quatrième bascule et un quatrième circuit à retard (27) connecté en contre-réaction entre la sortie de ce circuit à retard et une entrée du circuit logique fournissant le train d'impulsions représentant les bits d'information codés 00 ;

- une bascule de type RS (28) dont l'entrée set reçoit le signal retardé provenant de la troisième bascule (21) et dont l'entrée reset reçoit le signal retardé provenant de la quatrième bascule (25) ; et

- un circuit logique comprenant deux portes logiques OU (29, 30) dont l'une (29) reçoit l'inverse du signal fourni par la troisième bascule (21) et l'inverse du signal fourni par la bascule de type RS, et dont l'autre (30) reçoit l'inverse du signal fourni par la quatrième bascule (25) et le signal direct fourni par la bascule de type RS, et une porte logique OU exclusif (31) recevant les signaux de sortie des deux portes logiques OU et fournissant le signal d'erreur.

7/ Dispositif selon l'une des revendications 2 à 5, caractérisé en ce que les moyens de traitement des deux trains d'impulsions représentant respectivement les bits d'information codés 00 et ceux codés 11 comportent :

- une première porte logique NON-OU (33) ayant une première entrée inversée recevant le train d'impulsions représentant les bits d'information codés 11 et une seconde entrée recevant le signal d'horloge, cette porte logique fournissant un signal sous forme d'impulsions ;

- une seconde porte logique NON-OU (35) ayant une première entrée inversée recevant le train d'impulsions représentant les bits d'information codés 00 et une seconde entrée recevant le signal d'horloge, cette porte logique fournissant un signal sous forme d'impulsions ;

- un premier registre à décalage (36) à au moins trois bascules de type D (37) reliées en série et pilotées chacune par le signal fourni par la première porte logique NON-OU (33) et ayant chacune une entrée dite de remise à zéro recevant le signal fourni par la seconde porte logique NON-OU, la première bascule ayant une entrée à laquelle est appliqué un niveau haut égal à 1 ;

- un second registre à décalage (39) à au moins trois bascules de type D (40) reliées en série et pilotées chacune par le signal fourni par la seconde porte logique NON-OU (35) et ayant chacune une entrée dite de remise à zéro recevant le signal fourni par la première porte logique NON-OU, la première bascule ayant une entrée de niveau haut égal à 1 ; et

- une porte logique OU (42) recevant les signaux de sortie des deux registres à décalage et fournissant le signal d'erreur.

# FIG_1

# FIG_2

# FIG_3

# FIG_4

**a)** C

| 0 | 1 | 0 | 1 | 0 | 0 | 0 | 1 | 0 | 1 | 0 | 1 | 0 |

$T = 1/f_1$

$E_r$

**b)** H

**c)** $Q_1$

$T$

**d)** $Q_2$

**e)** $\overline{Q_1}$

**f)** $\overline{Q_2}$

**g)** $S_1$

$4T$　　$I'$

$2T$

**h)** $S_2$

$2T$

# FIG_5

$C$ → $D_1$　$Q_1$ →　$T = 1/f_1$　(16)

$CP_1$　$\overline{Q_1}$ →　$T = 1/f_1$　(17)

$H$ →

(11)

(10)

13 → $S_1$

14 → $S_2$

# FIG_6

0152854

# FIG_7

a) $S_1$

b) $S_2$

c) $Q_3$

d) $Q_4$

e) $\overline{Q_3}$

f) $\overline{Q_4}$

g) $Q_5$

h) $\overline{Q_5}$

i) "1" $S_3$

j) $S_4$

k) $S_5$

# FIG_8

a) $S_1$

b) $S_2$

c) $Q_3$

d) $Q_4$

e) $\overline{Q_3}$

f) $\overline{Q_4}$

g) $Q_5$

h) $\overline{Q_5}$

i) "1" $S_3$

j) $S_4$

k) $S_5$

0152854

# FIG_9

FIG_10

FIG_11

## Office européen des brevets

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENTS ABSTRACTS OF JAPAN, vol. 6, no. 144, 3 août 1982, page 24E122; & JP - A - 57 65943 (FUJITSU K.K.) 21-04-1982 * Abrégé * | 1-3 | H 04 L   25/49 |
| | --- | | |
| E | EP-A-0 115 327  (SIEMENS) * Page  3, lignes 15-18; page 5, ligne  31 - page 6, ligne 6; page 7,  lignes 11-13; revendication 5 * | 1-7 | |
| | ----- | | |

DOMAINES TECHNIQUES RECHERCHES (Int. Cl.4)

H 04 L

Le présent rapport de recherche a été établi pour toutes les revendications

| Lieu de la recherche | Date d'achèvement de la recherche | Examinateur |
|---|---|---|
| LA HAYE | 09-05-1985 | GEISLER J.A.R. |